# FASCICULE DE BREVET EUROPEEN

(11) **EP 1 621 543 B1**
(45) Date de publication et mention de la délivrance du brevet: **25.03.2009**
(21) Numéro de dépôt: 05021616.7
(22) Date de dépôt: 06.12.2002
(51) Int. Cl.: C07F 7/18

(54) **Procédé d'obtention de monoorganoxysilanes polysulfurés**
Verfahren zur Herstellung von Polyschwefelmonoorganoxysilanen
Method for obtaining polysulphur monoorganoxysilanes

(30) Priorité: 06.12.2001 FR 0115768; 09.08.2002 FR 0210145
(43) Date de publication de la demande: 01.02.2006
(62) Demande divisionnaire de: 02799785.7
(73) Titulaire: RHODIA CHIMIE, 92512 Boulogne Billancourt Cedex (FR)
(72) Inventeur: Guennouni, Nathalie, 69540 Irigny (FR); Pevere, Virginie, 69008 Lyon (FR); Vogin, Bernard, 69630 Chaponost (FR)
(74) Mandataire: Delenne, Marc

(56) Documents cités:
- EP-A- 0 680 997
- WO-A-02/083719
- WO-A-02/083782
- US-A- 5 405 985
- US-A- 5 466 848
- US-A- 5 859 275

## Description

La présente invention concerne une nouvelle voie de synthèse de monoorganoxysilanes polysulfurés qui est effectuée à partir de matières premières qui sont des produits disponibles à l'échelle industrielle, sans formation de produits secondaires nuisibles et avec un déroulement pratiquement quantitatif des différentes étapes constitutives de cette nouvelle voie de synthèse.

Plus précisément, il s'agit d'un procédé de préparation de composés organosiliciques contenant du soufre, répondant à la formule générale : 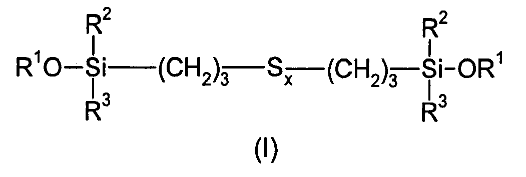 dans laquelle :
- les symboles R¹, identiques ou différents, représentent chacun un groupe hydrocarboné monovalent choisi parmi un radical alkyle, linéaire ou ramifié, ayant de 1 à 15 atomes de carbone et un radical alkoxyalkyle, linéaire ou ramifié, ayant de 2 à 8 atomes de carbone ;
- les symboles R² et R³, identiques ou différents, représentent chacun un groupe hydrocarboné monovalent choisi parmi un radical alkyle, linéaire ou ramifié, ayant de 1 à 6 atomes de carbone et un radical phényle ; et
- x est un nombre, entier ou fractionnaire, allant de 1,5 ± 0,1 à 5 ± 0,1.

Dans la formule (I) précédente, les radicaux R¹ préférés sont choisis parmi les radicaux : méthyle, éthyle, n-propyle, isopropyle, n-butyle, CH₃OCH₂₋CH₃OCH₂CH₂- et CH₃OCH(CH₃)CH₂- ; de manière plus préférée, les radicaux R¹ sont choisis parmi les radicaux : méthyle, éthyle, n-propyle et isopropyle.

Les radicaux R² et R³ préférés sont choisis parmi les radicaux : méthyle, éthyle, n-propyle, isopropyle, n-butyle, n-hexyle et phényle ; de manière plus préférée, les radicaux R² et R³ sont des méthyles.

Le nombre x, entier ou fractionnaire, va de préférence de 3 ± 0,1 à 5 ± 0,1, et de manière plus préférée de 3,5 ± 0,1 à 4,5 ± 0,1.

Les monoorganoxysilanes polysulfurés répondant à la formule (I) qui sont spécialement visés par la présente invention, sont ceux de formule : 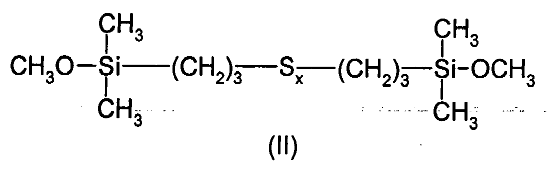 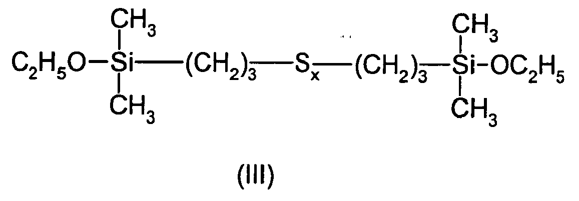 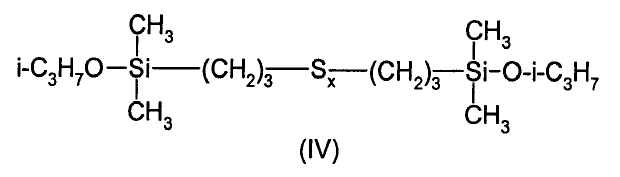 dans lesquelles le symbole x est un nombre entier ou fractionnaire allant de 1,5 ± 0,1 à 5 ± 0,1, de préférence de 3 ± 0,1 à 5 ± 0,1, et de manière plus préférée de 3,5 ± 0,1 à 4,5 ± 0,1.

Dans le présent mémoire, on précisera que le symbole x des formules (I), (II), (III) et (IV) est un nombre, entier ou fractionnaire, qui représente le nombre d'atomes de soufre présents dans une molécule de formule (I), (II), (III) et (IV).

En pratique ce nombre est la moyenne du nombre d'atomes de soufre par molécule de composé considéré, dans la mesure où la voie de synthèse choisie donne naissance à un mélange de produits polysulfurés ayant chacun un nombre d'atomes de soufre différent. Les monoorganoxysilanes polysulfurés synthétisés sont en fait constitués d'une distribution de polysulfures, allant du monosulfure à des polysulfures plus lourds (comme par exemple S_{≥5}), centrée sur une valeur moyenne en mole (valeur du symbole x) se situant dans les domaines général (x allant de 1,5 ± 0,1 à 5 ± 0,1), préférentiel (x allant de 3 ± 0,1 à 5 ± 0,1) et plus préférentiel (x allant de 3,5 ± 0,1 à 4,5 ± 0,1) mentionnés supra.

On sait qu'il est possible de préparer des polysulfures de bis-(trialkoxysilylalkyle) à partir des halogénures de trialkoxysilylalkyles correspondants par quatre procédés généraux de polysulfuration :
- le premier comporte la réaction des halogénures de trialkoxysilylalkyles avec le produit de réaction à l'ammoniac NH₃ ou d'une amine primaire ou secondaire avec H₂S et du soufre élémentaire, en opérant sous pression autogène à une température allant de 0°C à 175°C, en présence éventuellement d'un solvant organique polaire (ou non polaire) inerte (cf. en particulier US-A-4.125.552) ;
- le second comporte la réaction d'un mélange à base de soufre élémentaire et d'halogénure de trialkoxysilylalkyle avec le produit de réaction de H₂S avec une solution d'un alkoxyde métallique, en opérant à une température allant de 25°C à la température de reflux de milieu réactionnel (cf. en particulier US-A-5.489.701) ;
- le troisième comporte la réaction des halogénures de trialkoxysilylalkyles avec des polysulfures de métaux alcalins anhydres, en opérant à une température allant de 40°C à la température d'ébullition du mélange, en présence éventuellement d'un solvant organique polaire (ou non polaire) inerte (cf. en particulier US-A-5.859.275) ;
- le quatrième comporte la réaction des halogénures de trialkoxysilylalkyles avec du soufre élémentaire et un métal alcalin, en opérant à une température allant de 60°C à 100°C, en présence éventuellement d'un solvant organique aprotique (cf. en particulier US-A-6.066.752).

De leur côté, les halogénures de trialkoxysilylalkyles sont obtenus généralement par alcoolyse de la manière usuelle à partir des halogénures de trihalogénosilylalkyles correspondants.

Il est à noter que dans les documents précités de l'art antérieur, on ne trouve aucune information précise relative à la préparation des polysulfures de bis-(monoalkoxysilylalkyle) ; il est à noter encore que les documents précités ne donnent aucune information relative à la préparation des composés précurseurs correspondants. Or la production de ces matières premières est une étape importante qui est de nature à déterminer l'intérêt économique de la voie de synthèse globale aboutissant à la préparation des polysulfures de bis-(alkoxysilylalkyle) et en particulier à celle des polysulfures de bis-(monoorganoxysilylalkyle) de formule (I) qui sont visés dans la présente invention.

La demande de brevet EP-A-0680997 mentionne la préparation de polysulfures de bis-(dialkylalkoxysilylméthyle) par réaction d'un dialkylalcoxychlorométhylsilane avec un polysulfure métallique.

Proposer une nouvelle voie de synthèse performante pour accéder aux polysulfures de bis-(monoorganoxysilylalkyle) :
- parce qu'elle met en oeuvre des composés précurseurs dont l'accessibilité industrielle et le prix sont très intéressants sur le plan de la rentabilité industrielle,
- parce qu'elle comporte un enchaînement d'étapes, et c'est le cas en particulier pour l'étape de polysulfuration, qui se dérouleront quasi quantitativement, sans faire appel à des réactifs et/ou sans formation de produits secondaires qui sont des composés toxiques ou polluants pour l'environnement (comme H₂S et les métaux alcalins dans le cas de l'étape de polysulfuration),
tel est l'un des buts essentiels de la présente invention.

Le procédé selon la présente invention, pour la préparation des monoorganoxysilanes polysulfurés [ou polysulfure de bis-(monoorganoxysilylpropyle)] de formule (I) est caractérisé en ce qu'il consiste à enchaîner les étapes (a'), (b') et (c) suivantes :
■ étape (a') qui se déroule selon l'équation : 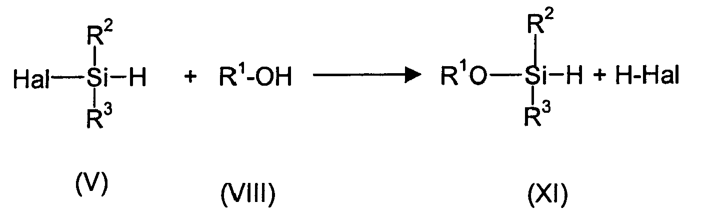 où :
   - le symbole Hal représente un atome d'halogène choisi parmi les atomes de chlore, brome et iode, l'atome de chlore étant préféré,
   - les symboles R², R³ et R¹ sont tels que définis supra,
   - la réaction est réalisée :
      - en faisant réagir à une température allant de -20°C à 200°C une mole du diorganohalogénosilane de formule (V) avec au moins une mole d'alcool de formule (VIII), en opérant éventuellement en présence d'une base et/ou d'un solvant organique,
      - et éventuellement en isolant le monoorganoxydiorganosilane de formule (XI) formé ;
■ étape (b') qui se déroule selon l'équation : 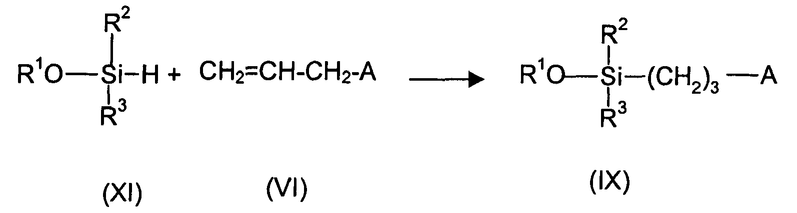 où:
   - les symboles R¹, R², R³ sont tels que définis supra,
   - A représente un groupe amovible choisi parmi : soit un atome d'halogène Hal appartenant aux atomes de chlore, brome et iode, l'atome de chlore étant préféré ; soit un radical para-R⁰-C₆H₄-SO₂-O- où R⁰ est un radical alkyle, linéaire ou ramifié en C1-C4, le radical tosylate para-CH₃-C₆H₄-SO₂-0- étant préféré ; soit un radical R⁰-SO₂-O- où R⁰ est tel que défini ci-avant, le radical mésylate CH₃-SO₂-O- étant préféré ; soit un radical R⁰-CO-O- où R⁰ est tel que defini ci-avant, le radical acétate CH₃-CO-O- étant préféré,
   - la réaction est réalisée :
      - en faisant réagir soit le milieu réactionnel obtenu à l'issue de l'étape (a'), soit le monoorganoxydiorganosilane de formule (XI) pris isolément après séparation dudit milieu, en utilisant une mole de silane de formule (XI) avec une quantité molaire stoechiométrique ou différente de la stoechiométrie du dérivé d'allyle de formule (VI) et en opérant, en milieu homogène ou hétérogène, en présence d'un initiateur consistant :
         - soit dans un activateur catalytique consistant dans : (i) au moins un catalyseur comprenant au moins un métal de transition ou un dérivé dudit métal, pris dans le groupe formé par Co, Ru, Rh, Pd, Ir et Pt ; et éventuellement (2i) au moins un promoteur de réaction d'hydrosilylation,
         - soit dans un activateur photochimique, consistant en particulier dans un rayonnement ultraviolet approprié ou dans un rayonnement ionisant approprié,
      - et éventuellement en isolant le dérivé de monoorganoxydiorganosilylpropyle de formule (IX) formé ;
■ étape (c) qui se déroule selon l'équation : 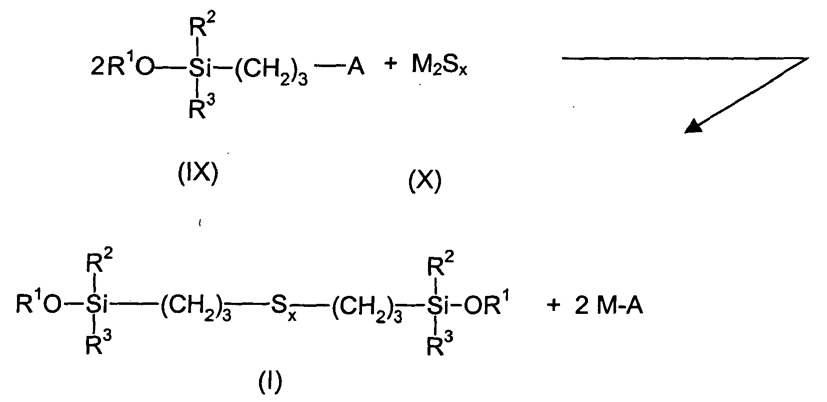 où:
   - les symboles R¹, R², R³, A et x sont tels que définis supra,
   - le symbole M représente un métal alcalin,
   - la réaction est réalisée :
      - en faisant réagir à une température allant de 20°C à 120°C, soit le milieu réactionnel obtenu à l'issue de l'étape (b'), soit le dérivé de monoorganoxydiorganosilylpropyle de formule (IX) pris isolément après séparation dudit milieu, avec le polysulfure métallique de formule (X) à l'état anhydre, en utilisant 0,5 ± 25 % mole et de préférence 0,5 ± 15 % mole de polysulfure métallique de formule (X) par mole du réactif de formule (IX) et en opérant éventuellement en présence d'un solvant organique polaire (ou non polaire) inerte,
      - et en isolant le polysulfure de bis-(monoorganoxysilylpropyle) de formule (I) formé.

Le procédé selon la présente invention permet d'accéder à des polysulfures de bis-(monoorganoxysilylpropyle) de formule (I) de manière industrielle en partant de diorganohalogénosilanes de formule (V), en particulier de (CH₃)₂HSiCl. Ces diorganohalogénosilanes de formule (V) peuvent être préparés avantageusement à l'échelle industrielle par un procédé tel que notamment celui décrit dans WO-A-99/31111.

Selon un mode particulièrement adapté de réalisation de l'invention, le procédé qui vient d'être décrit consiste à enchaîner les étapes (a'), (b') et (c), dans la définition desquelles le groupe amovible A correspond au symbole Hal représentant un atome d'halogène choisi parmi les atomes de chlore, brome et iode, et, de préférence, un atome de chlore.

L'étape (a') consiste à faire réagir l'hydrogénosilane de formule (V) avec l'alcool de formule (VIII).

En pratique, cette étape d'alkoxylation est réalisée de manière connue en soi selon un processus d'alcoolyse tel que celui décrit par exemple dans J.Amer.Chem.Soc.3601 (1960).

La réaction peut être réalisée, et il s'agit là d'une première disposition de mise en oeuvre, en présence d'une base pour neutraliser l'acide halogéné formé. Différents types de bases non aqueuses ou bases organiques, peuvent être utilisées, notamment des amines tertiaires comme par exemple les trialkylamines ou les dialkylanilines ; des bases de ce type appropriées sont par exemple la triéthylamine, la tributylamine, la diisopropyléthylamine ou la N,N-diméthylaniline. La base peut être utilisée soit en quantités stoechiométriques, soit en excès lorsque son élimination est ensuite facile à réaliser, soit encore en quantités qui sont inférieures à la stoechiométrie. Dans ce dernier cas, la base utilisée pourra avantageusement permettre de neutraliser la quantité résiduelle d'acide halogénée formé présente dans le milieu réactionnel et qui n'aurait pas pu être éliminé par les méthodes décrites ci-après ; dans ce contexte particulier, on peut utiliser, outre des amines tertiaires, des alkoxydes métalliques dérivés d'un métal alcalin (comme par exemple le sodium) et d'un alcool aliphatique inférieur en C1-C4 (comme par exemple le méthanol ou l'éthanol). La réaction peut être réalisée encore en présence d'un solvant organique qui peut être par exemple un alcool aliphatique inférieur en C1-C4 et en particulier l'alcool de formule (VIII) employé pour réaliser la réaction d'alcoolyse.

La réaction peut également être conduite, et il s'agit là d'une seconde disposition de mise en oeuvre, en l'absence d'une base. Cette seconde disposition est préférée. Dans ce cas, on favorisera l'élimination de l'acide halogéné formé du milieu réactionnel par des méthodes appropriées qui peuvent consister dans :
- 1 k : le dégazage de l'acide halogéné par chauffage du milieu réactionnel à son point d'ébullition,
- 2k : le "stripping" de l'acide halogéné au moyen d'un gaz inerte sec, comme par exemple l'azote,
- 3k : le dégazage par utilisation d'un vide partiel approprié,
- 4k : l'élimination de l'acide halogéné formé par entraînement à l'aide d'un solvant organique, ce solvant pouvant être avantageusement l'alcool de formule (VIII) employé en excès pour réaliser la réaction.

La réaction peut être mise en oeuvre éventuellement dans un solvant organique inerte, de type aprotique et peu polaire tel que des hydrocarbures aliphatiques et/ou aromatiques ; des solvants de ce type qui conviennent sont les alcanes linéaires ou cycliques, comme par exemple le pentane, l'hexane, le cyclohexane, et les hydrocarbures aromatiques comme par exemple le toluène, les xylènes.

S'agissant des autres conditions réactionnelles , la réaction est réalisée dans une large gamme de températures allant de préférence de 0°C à 160°C. Le rapport molaire alcool de formule (VIII)/silane de formule (V) se situe de préférence :
- lorsque la réaction est réalisée en présence d'une base : dans l'intervalle allant de 1 à 30 et, de préférence, de 1 à 15,
- lorsque la réaction est réalisée en absence d'une base dans l'intervalle allant de 1 à 30, et, de préférence, de 1 à 25.

Comme indiqué supra, une disposition de mise en oeuvre qui est préférée, consiste à conduire la réaction en l'absence d'une base. Dans ce cadre préféré, il est tout à fait avantageux de favoriser l'élimination de l'acide halogéné formé en utilisant la méthode 4k mentionnée également supra.

Quand la réaction est conduite de manière préférée en absence d'une base, la température de la réaction est avantageusement située dans une gamme de températures allant de 60°C à 160°C , et le rapport molaire alcool de formule (VIII)/silane de formule (V) est avantageusement situé dans l'intervalle allant de 3 à 23.

Par l'expression « température de la réaction », on entend définir la température d'ébullition du milieu réactionnel. Cette température est fonction de la composition du milieu et elle est réglée, de manière connue en soi, par la puissance de chauffe apportée au milieu et par le débit de l'alcool de formule (VIII) entrant dans le milieu réactionnel.

On peut pré-chauffer le milieu réactionnel de départ, contenant tous les ingrédients sauf l'alcool de formule (VIII), à une température se situant dans l'intervalle allant de 60°C à 160°C ou à une température supérieure. Quand on introduit l'alcool de formule (VIII), le milieu est modifié dans sa composition et la puissance de chauffe est réglée de manière à ce que la température s'équilibre à une valeur située dans la zone de températures mentionnée supra qui permet d'une part de porter l'alcool à l'ébullition et d'autre part, en faisant sortir cet alcool du milieu, d'entraîner l'acide halogéné formé. Le débit et la durée d'introduction de l'alcool de formule (VIII) sont réglés de manière à permettre une élimination progressive de l'acide halogéné du milieu, en laissant ainsi à la réaction le temps qui lui est nécessaire pour se dérouler. Par exemple, pour un débit allant de 100 à 600 grammes/heure, la durée d'introduction de l'alcool de formule (VIII) se situe entre 30 minutes et 10 heures.

Selon une troisième disposition de mise en oeuvre, qui est plus préférée, on utilise un alcool de formule (VIII) à l'état anhydre, c'est à dire un alcool dont la teneur en eau est inférieure à 1000 ppm et se situe de préférence dans l'intervalle allant de 10 à 600 ppm.

Selon une quatrième disposition de mise en oeuvre qui convient tout spécialement bien, la réaction est conduite en l'absence d'une base, à une température se situant dans l'intervalle allant de 60°C à 160°C , en engageant un alcool anhydre renfermant moins de 1000 ppm d'eau et en procédant à l'élimination de l'acide halogéné par application de la méthode 4k, le rapport molaire alcool de formule (VIII)/silane de formule (V) étant situé dans l'intervalle allant de 3 à 23.

Il est possible, et ceci constitue une cinquième disposition très avantageuse de mise en oeuvre, de ré-utiliser, en tout ou partie, le mélange distillé à base d'alcool de formule (VIII) et d'acide halogéné pour réaliser de façon discontinue une opération ultérieure. Autrement dit, l'étape (a') peut être conduite sans inconvénient en utilisant, comme alcool de formule (VIII) de départ, un réactif alcool consistant dans tout ou partie du mélange distillé à base d'alcool de formule (VIII) et d'acide halogéné issu de la réalisation de façon discontinue d'une opération précédente, avec addition complémentaire éventuelle d'alcool de formule (VIII) neuf.

Il est possible encore d'effectuer la réaction dans un réacteur fonctionnant de façon continue, de façon semi-continue ou de façon discontinue. Le monoorganoxydiorganosilane de formule (XI) est obtenu avec un rendement molaire au moins égal à 60%, basé sur l'halogénosilane de formule (V) de départ.

L'étape (b') consiste quant à elle à faire réagir le monoorganoxydiorganosilane de formule (XI) avec le dérivé d'allyle de formule (VI) en présence d'un initiateur choisi.

L'initiateur que l'on utilise comprend tous les initiateurs, répondant aux types indiqués supra, qui sont efficaces pour activer la réaction entre une fonction ≡SiH et une insaturation éthylénique.

Selon une disposition préférée concernant l'initiateur, ce dernier est choisi parmi les activateurs catalytiques. Ces activateurs catalytiques comprennent :
- au titre du (ou des) catalyseur(s) (i) : (i-1) au moins un métal de transition élémentaire finement divisé ; et/ou (i-2) un colloïde d'au moins un métal de transition ; et/ou (i-3) un oxyde d'au moins un métal de transition ; et/ou (i-4) un sel dérivé d'au moins un métal de transition et d'un acide minéral ou carboxylique ; et/ou (i-5) un complexe d'au moins un métal de transition équipé de ligand(s) halogéné(s) et/ou organique(s) pouvant posséder un ou plusieurs hétéroatome(s) et/ou de ligand(s) organosilicique(s) ; et/ou (i-6) un sel tel que défini supra où la partie métallique est équipée de ligand(s) tel(s) que défini(s) aussi supra ; et/ou (i-7) une espèce métallique choisie parmi les espèces précitées (métal de transition élémentaire, oxyde, sel, complexe, sel complexé) où le métal de transition est associé cette fois à au moins un autre métal choisi dans la famille des éléments des groupes 1 b, 2b, 3a, 3b, 4a, 4b, 5a, 5b, 6b, 7b, et 8 (sauf Co, Ru, Rh, Pd, Ir et Pt) de la classification périodique telle que publiée dans "Hanbook of Chemistry and Physics, 65^{ème} édition, 1984-1985, CRC Press, Inc.", ledit autre métal étant pris sous sa forme élémentaire ou sous une forme moléculaire, ladite association pouvant donner naissance à une espèce bi-métallique ou pluri-métallique ; et/ou (i-8) une espèce métallique choisie parmi les espèces précitées (métal de transition élémentaire et association métal de transition - autre métal ; oxyde, sel, complexe et sel complexé sur base métal de transition ou sur base association métal de transition - autre métal) qui est supportée sur un support solide inerte (par rapport à la réaction mise en oeuvre) tel que par exemple l'alumine, la silice, le noir de carbone, une argile, l'oxyde de titane, un aluminosilicate, un mélange d'oxydes d'aluminium et de zirconium, une résine polymère; et/ou (i-9) une espèce métallique supportée répondant à la définition donnée supra à l'alinéa (i-8), dans la structure de laquelle le support solide inerte porte lui-même au moins un ligand halogéné et/ou organique pouvant inclure un ou plusieurs hétéroatome(s) ;
- au titre du (ou des) promoteur(s) optionnel(s) (2i) : un composé, qui peut présenté par exemple la forme d'un ligand ou d'un composé ionique, pris en particulier dans le groupe formé par : un péroxyde organique ; un acide carboxylique ; un sel d'acide carboxylique ; une phosphine tertiaire ; un phosphite comme par exemple un phosphite éventuellement mixte d'alkyle et/ou d'aryle ; une amine ; un amide ; une cétone linéaire ou cyclique ; un trialkylhydrogénosilane ; le benzothriazole ; la phénothiazine ; un composé de type métal trivalent-(C₆H₅)₃ où métal = As, Sb ou P ; un mélange d'amine ou de cyclohexanone avec un composé organosilicique comprenant un ou plusieurs groupe(s) ≡Si-H ; les composés CH₂=CH-CH₂-OH ou CH₂=CH-CH₂₋OCOCH₃ ; une lactone ; un mélange de cyclohexanone avec la triphénylphosphine ; un composé ionique comme par exemple un nitrate ou un borate de métal alcalin ou d'imidazolinium, un halogénure de phosphonium, un halogénure d'ammonium quaternaire, un halogénure d'étain II.

Le (ou les) promoteur(s) optionnel(s) (2i), quand on en utilise un (ou plusieurs), est (sont) introduit(s) généralement en début de réaction, soit dans l'état ou il(s) se trouve(nt) normalement, soit sous forme d'un pré-mélange à base de : promoteur(s) + catalyseur(s) (i) ; ou promoteur(s) + tout ou partie du dérivé d'allyle de formule (VI).

Selon une disposition plus préférée concernant l'initiateur, ce dernier est choisi parmi les activateurs catalytiques préférés mentionnés ci-avant qui comprennent, au titre du (ou des) catalyseur(s) (i), l'une et/ou l'autre des espèces métalliques (i-1) à (i-9) où le métal de transition appartient au sous-groupe suivant : Ir et Pt.

Selon une disposition encore plus préférée concernant l'initiateur, ce dernier est choisi parmi les activateurs catalytiques préférés mentionnés ci-avant qui comprennent, au titre du (ou des) catalyseur(s) (i), l'une et/ou l'autre des espèces métalliques (i-1) à (i-9) où le métal de transition est Ir. Dans le cadre de cette disposition encore plus préférée, des catalyseurs à base d'Ir qui conviennent sont en particulier :

[IrCl(CO)(PPh₃)₂]

[Ir(CO)H(PPh₃)₃]

[Ir(C₈H₁₂)(C₅H₅N)P(C₆H₁₁)₃]PF₆

[IrCl₃],nH₂O

H₂[IrCl₆],nH₂O

(NH₄)₂IrCl₆

Na₂IrCl6

K₂IrCl₆

Klr(NO)Cl₅

[Ir(C₈H₁₂)₂]⁺BF₄⁻

[IrCl(CO)₃]ₙ

H₂IrCl₆

Ir₄(CO)₁₂

Ir(CO)₂(CH₃COCHCOCH₃)

Ir(CH₃COCHCOCH₃)

IrBr₃

IrCl₃

IrCl₄

IrO₂

(C₆H₇)(C₈H₁₂)Ir.

Dans le cadre de la disposition encore plus préférée mentionnée ci-avant, d'autres catalyseurs à base d'Ir qui conviennent encore mieux sont pris dans le groupe des complexes de l'iridium de formule :

[Ir(R⁴)Hal]₂ (XII)

où :
- le symbole R⁴ représente un ligand hydrocarboné insaturé comportant au moins une double liaison carbone=carbone et/ou au moins une triple liaison c≡c, ces liaisons insaturées pouvant être conjuguées ou non conjuguées, ledit ligand : étant linéaire ou cyclique (mono ou polycyclique), ayant de 4 à 30 atomes de carbone, ayant de 1 à 8 insaturations éthyléniques et/ou acétyléniques et comportant éventuellement un ou plusieurs hétéroatomes comme par exemple un atome d'oxygène et/ou un atome de silicium ;
- le symbole Hal est tel que défini supra.

Comme exemple de complexes de l'iridium de formule (XII) qui conviennent encore mieux, on citera ceux dans la formule desquels :
- le symbole R⁴ est choisi parmi le butadiène-1,3, l'hexadiène-1,3, le cyclohexadiène-1,3, le cyclooctadiène-1,3, le cyclooctadiène-1,5, le cyclododécatriène-1,5,9 et le norbornadiène, et les composés suivants de formules : 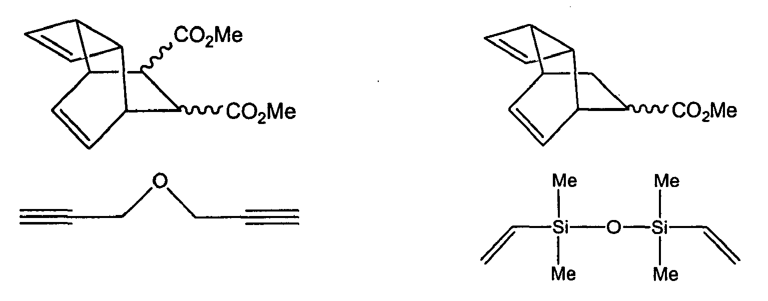 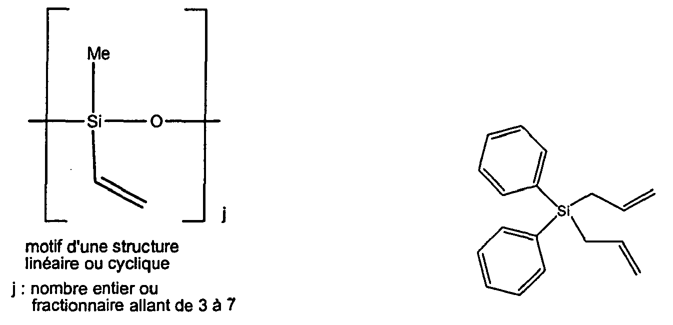 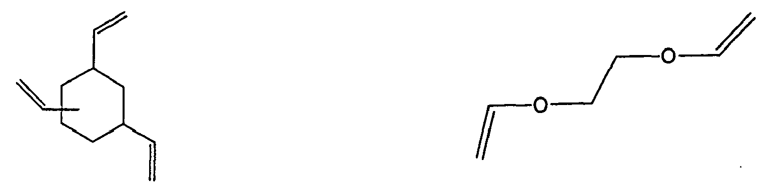
- le symbole Hal représente un atome de chlore.

A titre d'exemples spécifiques de complexes de l'iridium qui conviennent encore mieux, on citera les catalyseurs suivants :
di-µ-chlorobis(divinyltétraméthyldisiloxane)diiridium,
di-µ-chlorobis(η-1,5-hexadiene)diiridium,
di-µ-bromobis(η-1,5-hexadiene)diiridium,
di-µ-iodobis(η-1,5-hexadiene)diiridium,
di-µ-chlorobis(η-1,5-cyclooctadiene)diiridium,
di-µ-bromobis(η-1,5-cyclooctadiene)diiridium,
di-µ-iodobis(η-1,5-cyclooctadiene)diiridium,
di-µ-chlorobis(η-2,5-norbornadiene)diiridium,
di-µ-bromobis(η-2,5-norbornadiene)diiridium,
di-µ-iodobis(η-2,5-norbornadiene)diiridium.

Le catalyseur peut être utilisé, et il s'agit là d'une autre disposition préférentielle, en milieu homogène, comme cela est décrit dans JP-B-2.938.731. Dans ce cadre, la réaction peut être conduite soit de façon continue, soit de façon semi-continue, soit de façon discontinue. En fin d'opération, le produit de la réaction est séparé et recueilli par distillation du milieu réactionnel, et il est possible de recycler le catalyseur en réalisant une nouvelle charge de réactifs sur un culot de distillation contenant le catalyseur issu de l'étape de distillation du produit de l'opération précédente, avec addition complémentaire éventuelle de catalyseur neuf. Dans le cas de l'emploi de complexes, le recyclage du catalyseur peut être amélioré en additionnant aussi une petite quantité de ligand.

Le catalyseur peut être utilisé encore en milieu hétérogène. Ce mode opératoire fait appel en particulier à la mise en oeuvre d'un catalyseur qui est supporté sur un support solide inerte du type de ceux définis supra. Ce mode opératoire permet de réaliser la réaction dans un réacteur lit fixe fonctionnant de façon continue, de façon semi-continue ou de façon discontinue avec un recyclage. Il est également possible d'effectuer la réaction en réacteur standard agité fonctionnant de façon continue, semi-continue ou discontinue.

Revenons au cas préféré où le catalyseur est utilisé en milieu homogène. Comme spécifié ci-avant, il est possible dans ce contexte de récupérer le métal du catalyseur contenu dans le culot de distillation liquide obtenu, en vue de son recyclage.

En fin d'opération, le produit de la réaction est donc séparé et recueilli par distillation du milieu réactionnel, et il est possible de récupérer le métal catalytique contenu dans le culot de distillation liquide, ledit métal se trouvant sous sa forme originale de catalyseur ou sous une forme transformée. Selon une modalité qui convient bien, le culot liquide de distillation est mis en contact avec une quantité adsorbante efficace d'un agent adsorbant solide. L' adsorbant solide se présente généralement sous forme de poudre, d'extrudé, de granulé ou greffé sur un support comme la cellulose par exemple.

Comme adsorbant solide on recommande plus spécialement d'utiliser le noir de carbone; les charbons actifs; les tamis moléculaires qui sont le plus souvent des zéolites synthétiques, des silicalites ou des aluminosilicates métallique; des silices ; des alumines activées ; des charges adsorbantes à base de diatomite et de perlite ; des argiles activées et broyées à base de bentonite et d'attapulgite ; des résines échangeuses d'ions ; ou des résines de type amberlites ou amberlystes.

L'adsorption peut être mise en oeuvre : en discontinu (i.e. en batch) avec des composé type poudre ; en continu via une colonne ou à travers un lit fixe. Le temps de contact peut varier de 5 minutes à 10 heures, de préférence entre 30 minutes et 7 heures en batch. La température peut varier de 5 à 150°C, de préférence de 10 à 30 °C.

La quantité d'adsorbant utilisée pour les charbons actifs, les tamis moléculaires, les silices, les alumines ainsi que les adjuvants minéraux est fortement liée d'une part à la capacité d'adsorption spécifique relative à chacun des adsorbants qu'il est possible d'utiliser dans le cadre de l'invention et d'autre part aux paramètres de mise en oeuvre telle que la température et la présence ou non d'un solvant.

La capacité d'adsorption (q) est exprimée en nombre de moles de métal adsorbé par kilogramme d'adsorbant utilisé. Cette quantité q est généralement comprise entre 0.1 et 30, de préférence entre 0.5 et 20. Dans le cas où l'adsorbant est une résine échangeuse d'ions, la résine se caractérise par une valeur de capacité d'échange qui est spécifique pour chaque grade de résine et qui est relative à la fonctionnalité portée par cette résine. On exprime cette capacité d'échange en général en meq/g pour un produit sec ou en meq./ml sur produit humide. On utilisera ces résines de préférences de telle manière que le rapport molaire entre la fonction portée par la résine et le métal présent dans la solution à traiter soit compris entre 1 et 30, de préférence entre 1 et 15 et, plus particulièrement, entre 1 et 5.

L'étape d'adsorption peut être mise en oeuvre à pression atmosphérique ou sous pression réduite, et, éventuellement en présence d'un solvant inerte vis à vis de l'halogénure d'hydrogène H-Hal présent à l'état de trace dans le milieu. On recommande d'utiliser les alcanes (de préférence en C₆ et C₇), et les solvant aromatiques (toluène, xylène ou chlorobenzène).

L'adsorbant solide à la surface duquel le métal catalytique est adsorbé, est séparé du culot de distillation par tout moyen convenable de séparation liquide/solide tel que filtration, centrifugation ou sédimentation. Le métal est ensuite séparé de l'adsorbant par tout moyen physico-chimique compatible avec ledit adsorbant.

Selon une variante qui convient plus particulièrement bien, le procédé de récupération comporte en outre, après l'étape (1) au cours de laquelle on distille le milieu réactionnel pour séparer le produit formé d'un culot liquide de distillation comportant les sous-produits et le métal catalytique ou ses dérivés, une étape (2) de mise en contact du culot liquide avec de l'eau en présence éventuellement d'un solvant organique inerte vis-à-vis de H-Hal formé, en vue d'obtenir une phase aqueuse et une phase organique et d'hydrolyser ledit culot. Pour des raisons de facilité de mise en oeuvre, d'efficacité du traitement ainsi que pour améliorer la sécurité du procédé de récupération, on recommande de travailler avec un culot de distillation pré-hydrolysé et de le soumettre ensuite à l'étape d'adsorption (3).

L'hydrolyse peut se faire en milieu acide ou basique. Si la réaction se fait en milieu acide, la solution aqueuse utilisée comme réactif peut être pré-acidifiée (à l'H-Hal par exemple) ou être constituée uniquement d'eau déminéralisée. Le pH de la solution évolue alors au cours de la réaction vers des valeurs inférieures à 7. Dans ce cas, il est possible de réaliser une neutralisation de la phase aqueuse en fin d'hydrolyse en ajoutant une base. L'hydrolyse se fait de préférence en milieu basique de telle sorte que tout l'H-Hal soit éliminé. Il est recommandé d'effectuer la coulée du culot sur un pied de solution aqueuse. L'hydrolyse peut se faire à des températures comprises de -15°C à 80°C. La réaction étant exothermique, on préfère réaliser la coulée du culot à des températures modérées comprises entre -10 et 30°C. Un contrôle de la température peut s'avérer nécessaire. L'eau utilisée pour l'hydrolyse peut être introduite sous forme de glace ou un mélange glace/sel. En fin de coulée du culot, le milieu obtenu est biphasique constitué d'une phase organique et d'une phase aqueuse.

De préférence l'eau est ajoutée en quantité suffisante pour que l'H-Hal formé ne soit pas à saturation dans la phase aqueuse.

S'agissant des autres conditions réactionnelles propres à l'étape (b') du procédé selon la présente invention, la réaction est réalisée dans une large gamme de températures allant de préférence de -10°C à 100°C, en opérant sous la pression atmosphérique ou sous une pression supérieure à la pression atmosphérique qui peut atteindre ou même dépasser 20.10⁵Pa.

La quantité du dérivé d'allyle de formule (VI) utilisée est de préférence de 1 à 2 moles pour 1 mole de composé organosilicique. Quant à la quantité de catalyseur(s) (i), exprimée en poids de métal de transition pris dans le groupe formé par Co, Ru, Rh, Pd, Ir, et Pt, elle se situe dans l'intervalle allant de 1 à 10 000 ppm, de préférence allant de 10 à 2000 ppm et plus préférentiellement allant de 30 à 1000 ppm, basés sur le poids de composé organosilicique de formule (XI). La quantité de promoteur(s) (2i), quand on en utilise un ou plusieurs, exprimée en nombre de moles de promoteur(s) par atome-gramme de métal de transition pris dans le groupe formé par Co, Ru, Rh, Pd, Ir et Pt, se situe dans l'intervalle allant de 0,1 à 1000, de préférence allant de 0,5 à 500 et plus préférentiellement allant de 1 à 300. Le dérivé de monoorganoxydiorganosilylpropyle de formule (IX) est obtenu avec un rendement molaire au moins égal à 80% basé sur le composé organosilicique de formule (XI) de départ.

L'étape (c) consiste à faire réagir directement le dérivé de monoorganoxydiorganosilylpropyle de formule (IX) avec un polysulfure métallique de formule (X).

Selon une disposition préférée, les polysulfures métalliques de formule (X) anhydres sont préparés par réaction d'un sulfure alcalin, contenant éventuellement de l'eau de cristallisation, de formule M₂S (XIII) où le symbole M a la signification donnée supra (métal alcalin), avec du soufre élémentaire en opérant à une température allant de 60°C à 300°C, éventuellement sous pression et éventuellement encore en présence d'un solvant organique anhydre.

De manière avantageuse, le sulfure alcalin M₂S mis en oeuvre est le composé disponible industriellement qui est généralement sous forme d'un sulfure hydraté ; un sulfure alcalin de ce type qui convient bien est le sulfure Na₂S disponible dans le commerce qui est un sulfure hydraté contenant 55 à 65% en poids de Na₂S.

Selon une disposition plus préférée de conduite de l'étape (c), les polysulfures métalliques de formule (X) anhydres sont préparés au préalable à partir d'un sulfure alcalin M₂S sous forme d'un sulfure hydraté, selon un processus qui consiste à enchaîner les phases opératoires (1) et (2) suivantes :
- phase (1), où on procède à une déshydratation du sulfure alcalin hydraté en applicant la méthode appropriée qui permet d'éliminer l'eau de cristallisation tout en conservant le sulfure alcalin à l'état solide, pendant la durée de la phase de déshydratation ;
- phase (2), où on procède ensuite à la mise en contact d'une mole de sulfure alcalin déshydraté obtenu avec n(x-1) moles de soufre élémentaire, en opérant à une température allant de 20°C à 120°C, éventuellement sous pression et éventuellement encore en présence d'un solvant organique anhydre, le facteur n précité se situant dans l'intervalle allant de 0,8 à 1,2 et le symbole x étant tel que défini supra.

A propos de la phase (1), comme protocole de déshydratation qui convient bien, on citera notamment le séchage du sulfure alcalin hydraté, en opérant sous un vide partiel allant de 1,33.10²Pa à 40.10²Pa et en portant le composé à sécher à une température allant, en début de séchage, de 70°C à 85°C, puis en élevant ensuite progressivement la température en cours de séchage de la zone allant de 70°C à 85°C jusqu'à atteindre la zone allant de 125°C à 135°C, en suivant un programme prévoyant une première montée en température de +10°C à +15°C au bout d'une première durée variant de 1 heure à 6 heures, suivie d'une seconde montée en température de +20°C à +50°C au bout d'une seconde durée variant de 1 heure à 4 heures.

A propos de la phase (2), comme protocole de sulfuration qui convient bien, on citera la réalisation de cette réaction en présence d'un solvant organique anhydre ; les solvants appropriés sont notamment les alcools aliphatiques inférieurs en C1-C4 anhydres, comme par exemple le méthanol ou l'éthanol anhydre. Le nombre d'atomes de soufre élémentaire Sₓ dans le polysulfure métallique M₂Sₓ est fonction du rapport molaire du S par rapport à M₂S ; par exemple, l'utilisation de 3 moles de S (n=1 et x-1=3) par mole de M₂S donne le tétrasulfure alcalin de formule (X) où x=4.

Pour en revenir à la réalisation de l'étape (c), cette dernière est réalisée dans une large gamme de températures allant de préférence de 50°C à 90°C, en opérant de préférence encore en présence d'un solvant organique et, dans ce cadre, on utilisera avantageusement les alcools dont on a parlé ci-avant à propos de la conduite de la phase (2).

Le produit M-A, et en particulier l'halogénure M-Hal, formé en cours de réaction est éliminé généralement en fin d'étape par exemple par filtration.

Le polysulfure de bis-(monoorganoxydiorganosilylpropyl) de formule (I) formé est obtenu avec un rendement molaire au moins égal à 80%, basé sur le dérivé de monoorganoxydiorganosilylpropyle de formule (IX) de départ.

L'exemple suivant illustre la présente invention.

### EXEMPLE 1

Cet exemple décrit la préparation du tétrasulfure de bis-(monoéthoxydiméthylsilylpropyle) de formle (III) dans laquelle le nombre x est centré sur 4.

Le schéma réactionnel concerné par cet exemple est le suivant : 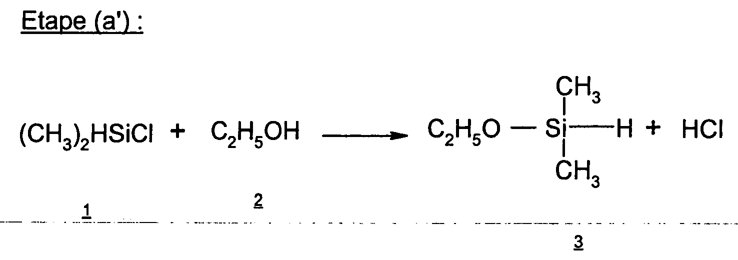 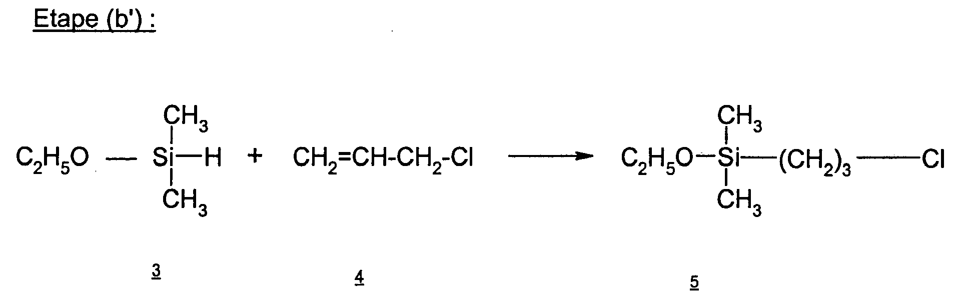 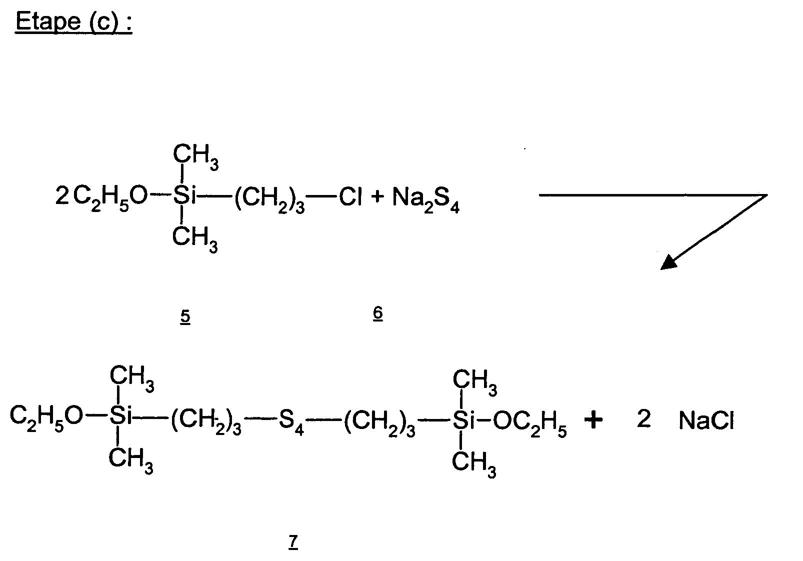 où le réactif 6 est obtenu selon l'équation :

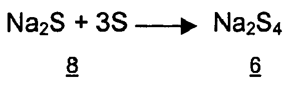

### 1) Etape (a') : synthèse de 3:

Dans un réacteur de 250 ml, équipé d'un condenseur avec possibilité de reflux (température = -20°C) et d'une agitation mécanique, on charge de l'éthanol 2 anhydre dont la teneur en eau est inférieure à 200 ppm (35 ml ; 0,6 mole) et de la *N,N*-diméthylaniline distillée (76 ml ; 0,61 mole). La température du milieu réactionnel est maintenue entre 0 et 5°C.

Le diméthylhydrogénochlorosilane 1 (76 ml ; 0,5 mole) est coulé progressivement sur le milieu réactionnel de telle sorte que la température n'excède pas 5°C. Dès la fin de la coulée, la température du milieu réactionnel est remontée vers +20°C, puis ce dernier est maintenu à reflux sous agitation pendant 1 heure.

Le produit désiré, le diméthyléthoxyhydrogénosilane 3 est isolé du mélange réactionnel par distillation fractionnée sous pression atmosphérique (on récupère la fraction ayant une température d'ébullition allant de 55 à 58°C). Les analyses effectuées sont en accord avec les données de la littérature (cf. Anal. Chem., 1997, 69, 1756).

### 2) Etape (b') : synthèse de 5 :

Dans un réacteur de 250 ml, équipé d'un condenseur avec possibilité de reflux (température = -20°C) et d'une agitation mécanique, on charge le chlorure d'allyle 4 (40 ml ; 38 g ; 0,496 mole) et de l'acide chloroplatinique en solution 0,1N dans l'isopropanol (20 mg; soit 0,76 mg de Pt). La température du milieu réactionnel est maintenue à 40°C.

Le diméthyléthoxyhydrogénosilane 3 (62,1 g ; 82 ml ; 0,596 mole) est coulé sur le milieu réactionnel de telle sorte que la température soit maintenue à 40°C +/- 5°C. A la fin de la coulée, la température du milieu réactionnel est maintenue sous agitation à +40°C pendant 3 heures.

Le mélange réactionnel est analysé par Chromatographie en Phase Vapeur (CPV) ; le silane 3 est totalement consommé (taux de transformation = 100 %) et le rendement molaire (non optimisé) en diméthyléthoxychloropropylsilane 5 est de 55%. Une dévolatilisation permet de récupérer dans le culot de distillation le produit désiré, le diméthyléthoxychloropropylsilane 5, avec une pureté molaire supérieure à 95%, déterminée par CPV, RMN-¹H et RMN-²⁹Si.

### 3) Etape (c) : synthèse de 7 :

### 3.1) Préparation du Na₂S₄ anhydre 6 :

### • Phase 1 : séchage du Na₂S hydraté :

Dans un ballon de 1 litre en verre d'un évaporateur rotatif, on introduit 43,6 g de Na₂S hydraté industriel en écailles contenant environ 60,5% en poids de Na₂S. Le ballon est mis sous atmosphère d'argon puis mis sous pression réduite à 13,3.10²Pa.

Le ballon trempe dans un bain d'huile, dont la température est alors portée à 76°C. Cette température est maintenue pendant 2 heures. Ensuite, un protocole d'augmentation de la température du bain d'huile est appliqué, afin d'éviter la fusion du Na₂S, qui se produit entre 85 et 90°C environ. L'augmentation progressive de la température a pour but d'accompagner l'évolution de la température de fusion du produit à sécher qui augmente lorsque le produit se déshydrate. Le protocole appliqué est le suivant : 1 heure à 82 °C, 2 heures à 85°C, 1 heure à 95°C, 1 heure à 115°C et enfin 1 heure à 130°C. A noter que ce protocole est modifiable en fonction de la quantité à sécher, de la pression opératoire, et d'autres paramètres ayant une influence sur la vitesse d'élimination de l'eau. La quantité d'eau éliminée, mesurée par différence de masse, est de 17,2 g, ce qui correspond à une humidité de 39,5% en poids.

### • Phase (2) : synthèse de Na₂S₄ 6 :

Le Na₂S séché (26 g), selon le protocole décrit supra, est mis en suspension dans 400 ml d'éthanol, et transvasé, par aspiration, dans un réacteur agité en verre d'un litre, double enveloppé, équipé d'un condenseur avec possibilité de reflux. On introduit en complément dans ce réacteur 31,9 g de soufre ainsi que 200 ml d'éthanol anhydre. La température du mélange est portée à 80°C environ (faible ébullition de l'éthanol), et il est agité à 600 tr/min. Le mélange est maintenu à 80°C pendant 2 heures. Progressivement, les solides (Na₂S et le soufre) disparaissent et le mélange passe du jaune à l'orange, puis au brun. En fin de réaction, le mélange est homogène à 80°C : on dispose de 58 g environ de Na₂S₄ anhydre (0,33 mole), dans 600 ml d'éthanol

### 3.2) Préparation de 7 :

Au Na₂S₄ anhydre dans 600ml d'éthanol préparé précédemment, maintenu dans son réacteur de préparation à 80°C (faible ébullition de l'éthanol) et agité à 600 tr/min, on introduit par un tube plongeant, à l'aide d'une pompe, 114 g de chloropropyldiméthyléthoxysilane 5 ayant une pureté molaire supérieure à 95 % Un précipité de chlorure de sodium apparaît. Après la fin de l'introduction du chloropropyldiméthyléthoxysilane 5, le mélange est maintenu à 80 °C pendant 2 heures. Ensuite, le mélange est refroidi à température ambiante, soutiré puis filtré pour éliminer les solides en suspension, dont le chlorure de sodium. Le gâteau de filtration est lavé à l'éthanol pour en extraire au mieux les produits organiques. Le filtrat est réintroduit dans le réacteur pour y être distillé sous pression réduite (environ 20.10²Pa) dans le but d'éliminer l'éthanol, et les légers éventuels. On récupère 114 g de culot, qui correspond au tétrasulfure de bis-(monoéthyoxydiméthylsilylpropyle), dosé à au moins 96% de pureté (molaire).

On obtient un rendement massique en tétrasulfure de bis-(monoéthyoxy-diméthylsilylpropyle) de 87%.

Un contrôle par RMN-¹H, par RMN-²⁹Si et par RMN-¹³C permet de verifier que la structure obtenue est conforme avec la formule (III) donnée dans la description.

Le nombre moyen d'atomes de S par molécule de formule (III) est égal à 3,9 ± 0,1 (x = 3,9 ± 0,1 ).

## Revendications

1. Procédé pour la préparation des polysulfures de bis-(monoorganoxysilypropyle) de formule : 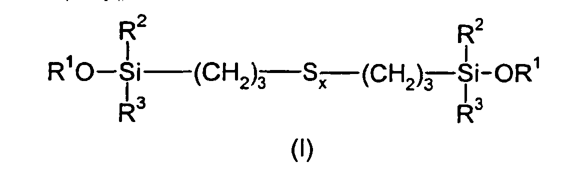 dans laquelle :
• les symboles R¹, identiques ou différents, représentent chacun un groupe hydrocarboné monovalent choisi parmi un radical alkyle, linéaire ou ramifié, ayant de 1 à 15 atomes de carbone et un radical alkoxyalkyle, linéaire ou ramifié, ayant de 2 à 8 atomes de carbone ;
• les symboles R² et R³, identiques ou différents, représentent chacun un groupe hydrocarboné monovalent choisi parmi un radical alkyle, linéaire ou ramifié, ayant de 1 à 6 atomes de carbone et un radical phényle ; et
• x est un nombre, entier ou fractionnaire, allant de 1,5 ± 0,1 à 5 ± 0,1,
**caractérisé en ce qu'**il consiste à enchaîner les étapes (a'), (b') et (c) suivantes :
■ étape (a') qui se déroule selon l'équation : 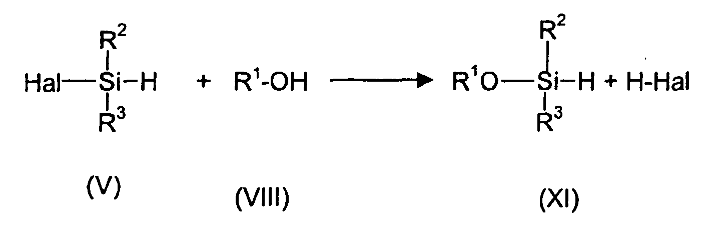 où :
- le symbole Hal représente un atome d'halogène choisi parmi les atomes de chlore, brome et iode,
- les symboles R², R³ et R¹ sont tels que définis supra,
- la réaction est réalisée :
• en faisant réagir à une température allant de -20°C à 200°C une mole du diorganohalogénosilane de formule (V) avec au moins une mole d'alcool de formule (VIII), en opérant éventuellement en présence d'une base et/ou d'un solvant organique,
• et éventuellement en isolant le monoorganoxydiorganosilane de formule (XI) formé ;
■ étape (b') qui se déroule selon l'équation : 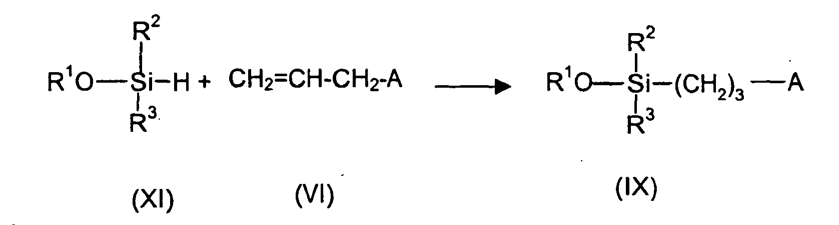 où :
- les symboles R¹, R², R³ sont tels que définis supra,
- A représente un groupe amovible choisi parmi : soit un atome d'halogène Hal appartenant aux atomes de chlore, brome et iode ; soit un radical para-R⁰-C₆H₄-SO₂-O- où R⁰ est un radical alkyle, linéaire ou ramifié en C1-C4 ; soit un radical R⁰-SO₂-O- où R⁰ est tel que défini ci-avant ; soit un radical R⁰-CO-O-où R⁰ est tel que defini ci-avant,
- la réaction est réalisée :
• en faisant réagir soit le milieu réactionnel obtenu à l'issue de l'étape (a'), soit le monoorganoxydiorganosilane de formule (XI) pris isolément après séparation dudit milieu, en utilisant une mole de silane de formule (XI) avec une quantité molaire stoechiométrique ou différente de la stoechiométrie du dérivé d'allyle de formule (VI) et en opérant, en milieu homogène ou hétérogène, en présence d'un initiateur consistant :
- soit dans un activateur catalytique consistant dans : (i) au moins un catalyseur comprenant au moins un métal de transition ou un dérivé dudit métal, pris dans le groupe formé par Co, Ru, Rh, Pd, Ir et Pt ; et éventuellement (2i) au moins un promoteur de réaction d'hydrosilylation,
- soit dans un activateur photochimique, consistant en particulier dans un rayonnement ultraviolet approprié ou dans un rayonnement ionisant approprié,
• et éventuellement en isolant le dérivé de monoorganoxydiorganosilylpropyle de formule (IX) formé,
■ étape (c) qui se déroule selon l'équation : 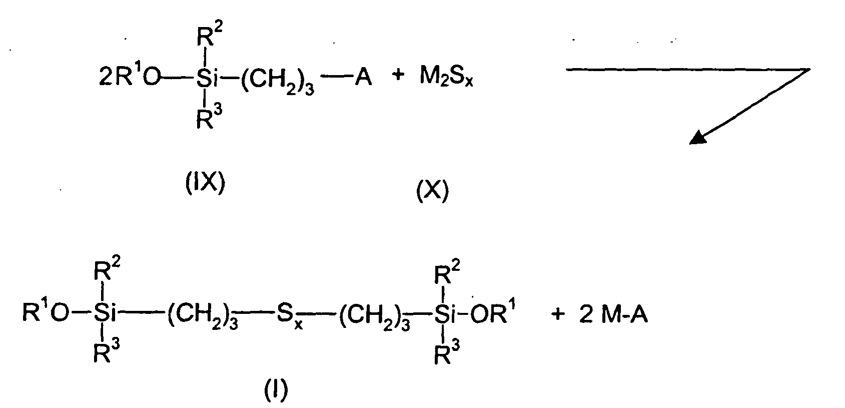 où:
- les symboles R¹, R², R³, A et x sont tels que définis supra,
- le symbole M représente un métal alcalin,
- la réaction est réalisée :
• en faisant réagir à une température allant de 20°C à 120°C, soit le milieu réactionnel obtenu à l'issue de l'étape (b'), soit le dérivé de monoorganoxydiorganosilylpropyle de formule (IX) pris isolément après séparation dudit milieu, avec le polysulfure métallique de formule (X) à l'état anhydre, en utilisant 0,5 ± 25% mole de polysulfure métallique de formule (X) par mole du réactif de formule (IX) et en opérant éventuellement en présence d'un solvant organique polaire (ou non polaire) inerte,
• et en isolant le polysulfure de bis-(monoorganoxysilylpropyle) de formule (I) formé.

2. Procédé selon la revendication 1, **caractérisé en ce qu'**il est réalisé en enchaînant les étapes (a'), (b') et (c), dans la définition desquelles le groupe amovible A correspond au symbole Hal représentant un atome d'halogène choisi parmi les atomes de chlore, brome et iode.

3. Procédé selon la revendication 1 ou 2, **caractérisé en ce que** l'étape (a') est réalisée en absence d'une base non aqueuse ou d'une base organique et en favorisant l'élimination de l'acide halogéné formé du milieu réactionnel par des méthodes appropriées qui consistent dans :
- 1 k : le dégazage de l'acide halogéné par chauffage du milieu réactionnel à son point d'ébullition,
- 2k : le "stripping" de l'acide halogéné au moyen d'un gaz inerte sec,
- 3k : le dégazage par utilisation d'un vide partiel approprié, ou
- 4k : l'élimination de l'acide halogéné formé par entraînement à l'aide d'un solvant organique.

4. Procédé selon l'une quelconque des revendications 1 à 3, **caractérisé en ce que** l'étape (a') est réalisée en utilisant un alcool de formule (VIII) à l'état anhydre, c'est à dire un alcool dont la teneur en eau est inférieur à 1000 ppm.

5. Procédé selon l'une quelconque des revendications 1 à 4, **caractérisé en ce que** l'étape (a') est conduite en l'absence d'une base, à une température se situant dans l'intervalle allant de 60°C à 160°C , en engageant un alcool anhydre renfermant moins de 1000 ppm d'eau et en procédant à l'élimination de l'acide halogéné par application de la méthode 4k, le rapport molaire alcool de formule (VIII)/silane de formule (V) étant situé dans l'intervalle allant de 3 à 23.

6. Procédé selon l'une quelconque des revendications 1 à 5, **caractérisé en ce que** l'étape (a') est conduite en utilisant, comme alcool de formule (VIII) de départ, un réactif alcool consistant dans tout ou partie du mélange distillé à base d'alcool de formule (VIII) et d'acide halogéné issu de la réalisation de façon discontinue d'une opération précédente, avec addition complémentaire éventuelle d'alcool de formule (VIII) neuf.

7. Procédé selon l'une quelconque des revendications 1 à 6, **caractérisé en ce que** l'étape (b') est réalisée en opérant en présence d'un activateur catalytique qui comprend, au titre du (ou des) catalyseur(s) (i), l'une et/ou l'autre des espèces métalliques suivantes : (i-1) au moins un métal de transition élémentaire finement divisé ; et/ou (i-2) un colloïde d'au moins un métal de transition ; et/ou (i-3) un oxyde d'au moins un métal de transition ; et/ou (i-4) un sel dérivé d'au moins un métal de transition et d'un acide minéral ou carboxylique ; et/ou (i-5) un complexe d'au moins un métal de transition équipé de ligand(s) halogéné(s) et/ou organique(s) pouvant posséder un ou plusieurs hétéroatome(s) et/ou de ligand(s) organosilicique(s) ; et/ou (i-6) un sel tel que défini supra où la partie métallique est équipée de ligand(s) tel(s) que défini(s) aussi supra ; et/ou (i-7) une espèce métallique choisie parmi les espèces précitées (métal de transition élémentaire, oxyde, sel, complexe, sel complexé) où le métal de transition est associé cette fois à au moins un autre métal choisi dans la famille des éléments des groupes 1b, 2b, 3a, 3b, 4a, 4b, 5a, 5b, 6b, 7b, et 8 (sauf Co, Ru, Rh, Pd, Ir et Pt) de la classification périodique (même référence), ledit autre métal étant pris sous sa forme élémentaire ou sous une forme moléculaire, ladite association pouvant donner naissance à une espèce bi-métallique ou pluri-métallique ; et/ou (i-8) une espèce métallique choisie parmi les espèces précitées (métal de transition élémentaire et association métal de transition - autre métal ; oxyde, sel, complexe et sel complexé sur base métal de transition ou sur base association métal de transition - autre métal) qui est supportée sur un support solide inerte tel que l'alumine, la silice, le noir de carbone, une argile, l'oxyde de titane, un aluminosilicate, un mélange d'oxydes d'aluminium et de zirconium, une résine polymère ; et/ou (i-9) une espèce métallique supportée répondant à la définition donnée supra à l'alinéa (i-8), dans la structure de laquelle le support solide inerte porte lui-même au moins un ligand halogéné et/ou organique pouvant inclure un ou plusieurs hétéroatome(s).

8. Procédé selon la revendication 7, **caractérisé en ce que** l'étape (b') est réalisée en opérant en présence d'un activateur catalytique qui comprend, au titre du (ou des) catalyseur(s) (i), l'une et/ou l'autre des espèces métalliques (i-1) à (i-9) où le métal de transition appartient au sous-groupe formé par Ir et Pt.

9. Procédé selon la revendication 8, **caractérisé en ce que** l'étape (b') est réalisée en opérant en présence d'un activateur catalytique qui comprend, au titre du (ou des) catalyseur(s) (i), l'une et/ou l'autre des espèces métalliques (i-1) à (i-9) où le métal de transition est l'Ir.

10. Procédé selon la revendication 9, **caractérisé en ce que** l'étape (b') est réalisée en opérant en présence d'un activateur catalytique qui comprend, au titre du (ou des) catalyseur(s) (i), au moins une espèce métallique de type (i-5) appartenant aux complexes de l'iridium de formule :
[Ir(R⁴)Hal]₂ (XII)
où :
- le symbole R⁴ représente un ligand hydrocarboné insaturé comportant au moins une double liaison carbone=carbone et/ou au moins une triple liaison c≡c, ces liaisons insaturées pouvant être conjuguées ou non conjuguées, ledit ligand : étant linéaire ou cyclique (mono ou polycyclique), ayant de 4 à 30 atomes de carbone, ayant de 1 à 8 insaturations éthyléniques et/ou acétyléniques et comportant éventuellement un ou plusieurs hétéroatomes ;
- le symbole Hal est tel que défini supra.

11. Procédé selon l'une quelconque des revendications 1 à 10, **caractérisé en ce que** en fin d'étape (b'), quand le catalyseur a été utilisé en milieu homogène, on récupère le métal catalytique de la manière suivante :
- étape (1) : on distille le milieu réactionnel pour séparer le produit formé d'un culot liquide de distillation comportant les sous-produits et le métal du catalyseur ou ses dérivés,
- étape (2) : éventuellement on met en contact le culot avec de l'eau en présence éventuellement d'un solvant organique inerte vis-à-vis de H-Hal formé, en vue d'obtenir une phase aqueuse et une phase organique,
- étape(3) : on met en contact le culot formé en (1) ou le culot formé en (2) avec une quantité efficace de substance solide adsorbant le métal du catalyseur, et
- étape (4) : on sépare l'adsorbant du métal catalytique en vue de récupérer ledit métal.

12. Procédé selon l'une quelconque des revendications 1 à 11, **caractérisé en ce que** l'étape (c) est réalisé en engageant des polysulfures métalliques de formule (X) anhydres qui sont préparés au préalable à partir d'un sulfure alcalin M₂S sous forme d'un sulfure hydraté, selon un processus qui consiste à enchaîner les phases opératoires (1) et (2) suivantes :
• phase (1), où on procède à une déshydratation du sulfure alcalin hydraté en applicant la méthode appropriée qui permet d'éliminer l'eau de cristallisation tout en conservant le sulfure alcalin à l'état solide, pendant la durée de la phase de déshydratation ;
• phase (2), où on procède ensuite à la mise en contact d'une mole de sulfure alcalin déshydraté obtenu avec n(x-1) moles de soufre élémentaire, en opérant à une température allant de 20°C à 120°C, éventuellement sous pression et éventuellement encore en présence d'un solvant organique anhydre, le facteur n précité se situant dans l'intervalle allant de 0,8 à 1,2 et le symbole x étant tel que défini supra.

13. Procédé selon la revendication 12, **caractérisé en ce que,** à propos de la phase (1), comme protocole de déshydratation, on citera le séchage du sulfure alcalin hydraté en opérant sous un vide partiel allant de 1,33.10²Pa à 40.10²Pa et en portant le composé à sécher à une température allant, en début de séchage, de 70°C à 85°C, puis en élevant ensuite progressivement la température en cours de séchage de la zone allant de 70°C à 85°C jusqu'à atteindre la zone allant de 125°C à 135°C, en suivant un programme prévoyant une première montée en température de +10°C à +15°C au bout d'une première durée variant de 1 heure à 6 heures, suivie d'une seconde montée en température de +20°C à +50°C au bout d'une seconde durée variant de 1 heure à 4 heures.

## Claims

1. A process for the preparation of bis(monoorganoxysilylpropyl) polysulfides of formula : 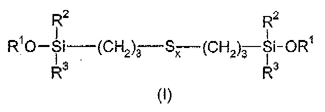 in which :
• the R¹ symbols, which are identical or different, each represent a monovalent hydrocarbonaceous group chosen from a linear or branched alkyl radical having from 1 to 15 carbon atoms and a linear or branched alkoxyalkyl radical having from 2 to 8 carbon atoms ;
• the R² and R³ symbols, which are identical or different, each represent a monovalent hydrocarbonaceous group chosen from a linear or branched alkyl radical having from 1 to 6 carbon atoms and a phenyl radical ; and
• x is an integer or fractional number ranging from 1.5 ± 0.1 to 5 ± 0.1,
**characterized in that** it consists in carrying out the following stages (a'), (b') and (c) :
■ stage (a'), which takes place according to the equation : 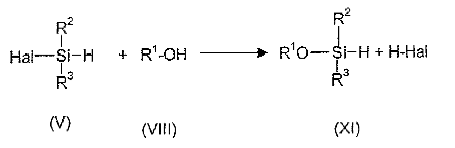 where :
- the Hal symbol represents a halogen atom chosen from the chlorine, bromine and iodine atoms,
- the R², R³ and R¹ symbols are as defined above,
- the reaction is carried out :
• by reacting, at a temperature ranging from -20°C to 200°C, one mol of the diorganohalosilane of formula (V) with at least one mol of alcohol of formula (VIII), the reaction optionally being carried out in the presence of a base and/or of an organic solvent,
• and optionally by isolating the monoorganoxydiorganosilane of formula (XI) formed ;
■ stage (b'), which takes place according to the equation : 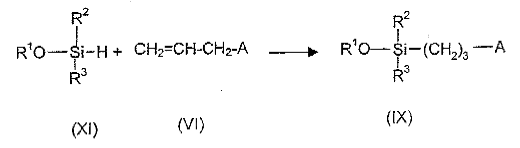 where :
- the R¹, R², R³ symbols are as defined above,
- A represents a removable group chosen from : either a halogen atom Hal belonging to the chlorine, bromine and iodine atoms ; or a para-R⁰-C₆H₄-SO₂-O- radical where R⁰ is a linear or branched C₁-C₄ alkyl radical ; or an R⁰-SO₂-O- radical where R⁰ is as defined above ; or an R⁰-CO-O- radical where R⁰ is as defined above,
- the reaction is carried out :
• by reacting either the reaction medium obtained on conclusion of stage (a') or the monoorganoxydiorganosilane of formula (XI), taken in isolation after separation from said medium, using one mol of silane of formula (XI), with a stoichiometric molar amount or a molar amount different from stoichiometry of the allyl derivative of formula (VI), the reaction being carried out in a homogeneous or heterogeneous medium in the presence of an initiator consisting :
- either of a catalytic activator consisting of : (i) at least one catalyst comprising at least one transition metal or one derivative of said metal taken from the group formed by Co, Ru, Rh, Pd, Ir and Pt; and optionally (2i) at least one hydrosilylation reaction promoter,
- or of a photochemical activator consisting in particular of appropriate ultraviolet radiation or of appropriate ionizing radiation,
• and optionally by isolating the monoorganoxydiorganosilylpropyl derivative of formula (IX) formed.
■ stage (c), which takes place according to the equation : 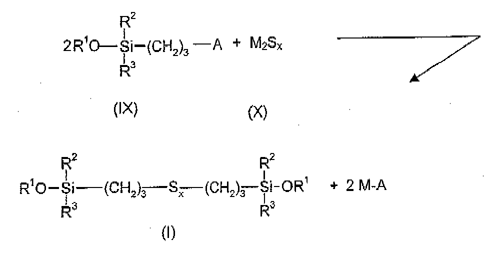 where :
- the R¹, R², R³, A and x symbols are as defined above,
- the M symbol represents an alkali metal,
- the reaction is carried out :
• by reacting, at a temperature ranging from 20°C to 120°C, either the reaction medium obtained on conclusion of stage (b') or the monoorganoxydiorganosilylpropyl derivative of formula (1X), taken in isolation after separation from said medium, with the metal polysulfide of formula (X) in the anhydrous state using 0.5 ± 25% mol of metal polysulfide of formula (X) per mole of the reactant of formula (IX), the reaction optionally being carried out in the presence of an inert polar (or nonpolar) organic solvent,
• and by isolating the bis(monoorganoxysilylpropyl) polysulfide of formula (I) formed.

2. The process as claimed in claim 1, **characterized in that** it is performed by carrying out the stages (a'), (b') and (c), in the definition of which the removable group A corresponds to the Hal symbol representing a halogen atom chosen from chlorine, bromine and iodine atoms.

3. The process as claimed in claim 1 or 2, **characterized in that** stage (a') is carried out in the absence of a nonaqueous base or of an organic base and by promoting the removal of the halogen acid formed from the reaction medium by appropriate methods which consist of :
- 1k : degassing the halogen acid by heating the reaction medium at its boiling point,
- 2k : stripping the halogen acid using a dry inert gas,
- 3k : degassing by using an appropriate partial vacuum, or
- 4k : removing the halogen acid formed by entrainment using an organic solvent.

4. The process as claimed in any one of claims 1 to 3, **characterized in that** stage (a') is carried out using an alcohol of formula (VIII) in the anhydrous state, that is to say an alcohol with a water content of less than 1000 ppm.

5. The process as claimed in any one of claims 1 to 4, **characterized in that** stage (a') is carried out in the absence of a base, at a temperature lying within the range from 60°C to 160°C, using anhydrous alcohol including less than 1000 ppm of water and removing the halogen acid by application of method 4k, the molar ratio of alcohol of formula (VIII) to silane of formula (V) lying within the range from 3 to 23.

6. The process as claimed in any one of claims 1 to 5, **characterized in that** stage (a') is carried out using, as starting alcohol of formula (VIII), an alcohol reactant consisting in all or part of the distilled mixture based on alcohol of formula (VIII) and on halogen acid resulting from the batchwise implementation of a preceding operation, with optional supplementary addition of fresh alcohol of formula (VIII).

7. The process as claimed in any one of claims 1 to 6, **characterized in that** stage (b') is carried out by operating in the presence of a catalytic activator which comprises, as the catalyst(s) (i), one and/or other of the following metal entities : (i-1) at least one finely divided elemental transition metal ; and/or (i-2) a colloid of at least one transition metal; and/or (i-3) an oxide of at least one transition metal; and/or (i-4) a salt derived from at least one transition metal and from an inorganic or carboxylic acid; and/or (i-5) a complex of at least one transition metal equipped with halogenated and/or organic ligand(s) which can have one or more heteroatom(s) and/or with organosilicon ligand(s) ; and/or (i-6) a salt as defined above where the metal part is equipped with ligand(s) also as defined above ; and/or (i-7) a metal entity chosen from the abovementioned entities (elemental transition metal, oxide, salt, complex, complexed salt) where the transition metal is combined this time with at least one other metal chosen from the family of the elements from Groups Ib, IIb, IIIa, IIIb, IVa, IVb, Va, Vb, VIb, VIIb and VIII (except Co, Ru, Rh, Pd, Ir and Pt) of the Periodic Table (same reference), said other metal being taken in its elemental form or in a molecular form, it being possible for said combination to give rise to a bimetallic or polymetallic entity ; and/or (i-8) a metal entity chosen from the abovementioned entities (elemental transition metal and transition metal-other metal combination; oxide, salt, complex and complexed salt on a transition metal base or on a transition metal-other metal combination base) which is supported on an inert solid support, such as alumina, silica, carbon black, a clay, titanium oxide, an aluminosilicate, a mixture of aluminum and zirconium oxides, or a polymer resin; and/or (i-9) a supported metal entity corresponding to the definition given above in section (i-8), in the structure of which the inert solid support itself carries at least one halogenated and/or organic ligand which can include one or more heteroatom(s).

8. The process as claimed in claim 7, **characterized in that** stage (b') is carried out by operating in the presence of a catalytic activator which comprises, as the catalyst(s) (i), one and/or other of the metal entities (i-1) to (i-9) where the transition metal belongs to the subgroup formed by Ir and Pt.

9. The process as claimed in claim 8, **characterized in that** stage (b') is carried out by operating in the presence of a catalytic activator which comprises, as the catalyst (s) (i), one and/or other of the metal entities (i-1) to (i-9) where the transition metal is Ir.

10. The process as claimed in claim 9, **characterized in that** stage (b') is carried out by operating in the presence of a catalytic activator which comprises, as the catalyst (s) (i), at least one metal entity of type (i-5) belonging to the iridium complexes of formula :
[Ir(R⁴)Hal]₂ (XII)
where :
- the R⁴ symbol represents an unsaturated hydrocarbonaceous ligand comprising at least one C=C double bond and/or at least one C≡C triple bond ; it being possible for these unsaturated bonds to be conjugated or nonconjugated, said ligand being linear or cyclic (mono- or polycyclic), having from 4 to 30 carbon atoms, having from 1 to 8 ethylenic and/or acetylenic unsaturations and optionally comprising one or more heteroatoms ;
- the Hal symbol is as defined above.

11. The process as claimed in any one of claims 1 to 10, **characterized in that,** at the end of stage (b'), when the catalyst has been used in a homogeneous medium, the catalytic metal is recovered in the following way :
- stage (1) : the reaction medium is distilled in order to separate the product formed from a liquid distillation residue comprising the byproducts and the metal of the catalyst or its derivatives,
- stage (2) : the residue is optionally brought into contact with water optionally in the presence of an organic solvent which is inert with respect to H-Hal formed, for the purpose of obtaining an aqueous phase and an organic phase,
- stage (3) : the residue formed in (1) or the residue formed in (2) is brought into contact with an effective amount of solid substance which adsorbs the metal of the catalyst, and
- stage (4) : the adsorbent is separated from the catalytic metal for the purpose of recovering said metal.

12. The process as claimed in any one of claims 1 to 11, **characterized in that** stage (c) is carried out using anhydrous metal polysulfides of formula (X) which are prepared beforehand from an alkali metal sulfide M₂S in the form of a sulfide hydrate according to a process which consists in linking together the following operating steps (1) and (2) :
• step (1), where the alkali metal sulfide hydrate is dehydrated by applying the appropriate method which makes it possible to remove the water of crystallization while retaining the alkali metal sulfide in the solid state throughout the duration of the dehydration step ;
• step (2), where one mol of dehydrated alkali metal sulfide obtained is subsequently brought into contact with n(x-1) mol of elemental sulfur, the reaction being carried out at a temperature ranging from 20°C to 120°C optionally under pressure and optionally also in the presence of an anhydrous organic solvent, the abovementioned factor n lying within the range from 0.8 to 1.2 and the x symbol being as defined above.

13. The process as claimed in claim 12, **characterized in that,** with respect to step (1), mention will be made, as dehydration protocol, of the drying of the alkali metal sulfide hydrate, the operation being carried out under a partial vacuum ranging from 1.33 × 10² Pa to 40 × 10² Pa and the compound to be dried being brought to a temperature ranging, at the start of drying, from 70°C to 85°C and then the temperature during drying subsequently being gradually raised from the region ranging from 70°C to 85°C until the region ranging from 125°C to 135°C is reached, a program being followed which provides a first rise in temperature of +10°C to +15°C after a first period of time varying from 1 hour to 6 hours, followed by a second rise in temperature of +20°C to +50°C after a second period of time varying from 1 hour to 4 hours.

## Patentansprüche

1. Verfahren zur Herstellung von Bis(monoorganoxysilylpropyl)polysulfiden der Formel: 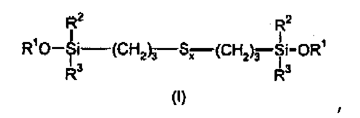 in welcher:
• die Symbole R¹, die gleich oder verschieden sind, jeweils für eine einwertige kohlenwasserstoffhaltige Gruppe, die unter einem linearen oder verzweigten Alkylrest mit 1 bis 15 Kohlenstoffatomen und einem linearen oder verzweigten Alkoxyalkylrest mit 2 bis 8 Kohlenstoffatomen ausgewählt ist, stehen;
• die Symbole R² und R³, die gleich oder verschieden sind, jeweils für eine einwertige kohlenwasserstoffhaltige Gruppe, die unter einem linearen oder verzweigten Alkylrest mit 1 bis 6 Kohlenstoffatomen und einem Phenylrest ausgewählt ist, stehen; und
• x eine ganze Zahl oder Bruchzahl, welche von 1,5 ± 0,1 bis 5 ± 0,1 geht, ist, **dadurch gekennzeichnet, dass** es darin besteht, die folgenden Schritte (a'), (b') und c) aneinander zu fügen:
■ einen Schritt (a'), der abläuft gemäß der Gleichung: 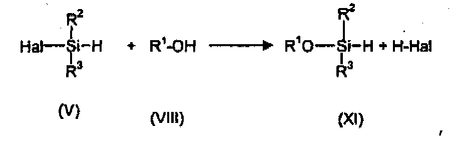
wobei:
- das Symbol Hal für ein unter den Chlor-, Brom- und Iodatomen ausgewähltes Halogenatom steht;
- die Symbole R², R³ und R¹ so, wie oben definiert, sind,
- die Reaktion ausgeführt wird:
• indem man bei einer Temperatur, die von -20°C bis 200°C geht, ein Mol Diorganohalogensilan der Formel (V) mit mindestens einem Mol Alkohol der Formel (VIII) reagieren lässt, indem man gegebenenfalls in Gegenwart einer Base und/oder eines organischen Lösemittels arbeitet,
• und indem man gegebenenfalls das gebildete Monoorganoxydiorganosilan der Formel (XI) isoliert;
■ einen Schritt (b'), der abläuft gemäß der Gleichung: 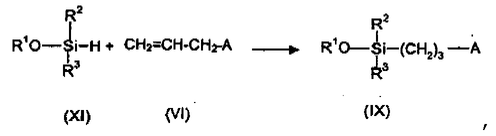 wobei:
- die Symbole R¹, R², R³ so, wie oben definiert, sind,
- A für eine ablösbare Gruppe steht, die ausgewählt ist unter: entweder einem Halogenatom Hal, welches zu den Chlor-, Brom- und Iodatomen gehört; oder einem Rest para-R⁰-C₆H₄-SO₂-O-, worin R⁰ ein linearer oder verzweigter (C₁-C₄)-Alkylrest ist; oder einem Rest R⁰-SO₂-O-, worin R⁰ so, wie oben definiert, ist; oder einem Rest R⁰-CO-O-, worin R⁰ so, wie oben definiert ist,
- die Reaktion ausgeführt wird:
• indem man entweder das am Ende des Schritts (a') erhaltene Reaktionsmedium oder das Monoorganoxydiorganosilan der Formel (XI), nach der Abtrennung des Mediums isoliert genommen, reagieren lässt, indem man ein Mol Silan der Formel (XI) mit einer stöchiometrischen oder von der Stöchiometrie verschiedenen molaren Menge des Allylderivats der Formel (VI) einsetzt und indem man in homogenem oder heterogenem Milieu arbeitet in Gegenwart eines Initiators, bestehend:
- entweder aus einem katalytischen Aktivator, bestehend aus: (i) mindestens einem Katalysator, welcher mindestens ein Übergangsmetall oder ein Derivat des Metalls, ausgewählt in der aus Co, Ru, Rh, Pd, Ir und Pt gebildeten Gruppe, umfasst; und gegebenenfalls (2i) mindestens einem Beschleuniger der Hydrosilylierungsreaktion,
- oder aus einem photochemischen Aktivator, welcher insbesondere aus einer geeigneten ultravioletten Strahlung oder aus einer geeigneten ionisierenden Strahlung besteht,
• und gegebenenfalls indem man das gebildete Monoorganoxydiorganosilylpropyl-Derivat der Formel (IX) isoliert,
■ einen Schritt (c), der abläuft gemäß der Gleichung: 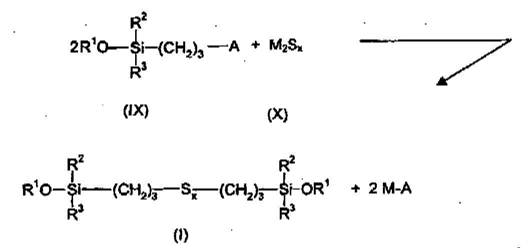 wobei:
- die Symbole R¹, R², R³, A und x so, wie oben definiert, sind,
- das Symbol M für ein Alkalimetall steht,
- die Reaktion ausgeführt wird:
• indem man bei einer Temperatur, die von 20°C bis 120°C geht, entweder das am Ende des Schritts (b') erhaltene Reaktionsmedium oder das Monoorganoxydiorganosilylpropyl-Derivat der Formel (IX), nach Abtrennung des Mediums isoliert genommen, mit dem Metallpolysulfid der Formel (X) in wasserfreiem Zustand reagieren lässt, indem man 0,5 ± 25% Mol Metallpolysulfid der Formel (X) pro Mol des Reaktanten der Formel (IX) einsetzt und indem man gegebenenfalls in Gegenwart eines polaren (oder nicht polaren) inerten organischen Lösemittels arbeitet,
• und indem man das gebildete Bis(monoorganoxysilylpropyl)polysulfid der Formel (I) isoliert.

2. Verfahren nach Anspruch 1, **dadurch gekennzeichnet, dass** es ausgeführt wird, indem man die Schritte (a'), (b') und (c) aneinander fügt, in der Definition von welchen die ablösbare Gruppe A dem Symbol Hal, welches für ein unter den Chlor-, Brom- und Iodatomen ausgewähltes Halogenatom steht, entspricht.

3. Verfahren nach Anspruch 1 oder 2, **dadurch gekennzeichnet, dass** der Schritt (a') in Abwesenheit einer nicht-wässrigen Base oder einer organischen Base ausgeführt wird und unter Begünstigung der Eliminierung der gebildeten halogenhaltigen Säure aus dem Reaktionsmedium durch geeignete Verfahren, die bestehen aus:
- 1k: der Ausgasung der halogenhaltigen Säure durch Erwärmen des Reaktionsmediums auf seinen Siedepunkt,
- 2k: dem "Stripping" der halogenhaltigen Säure mittels eines trockenen inerten Gases,
- 3k: der Ausgasung durch Einsatz eines geeigneten Teilvakuums oder
- 4k: der Entfernung der gebildeten halogenhaltigen Säure durch Mitreißen mit Hilfe eines organischen Lösemittels.

4. Verfahren nach einem der Ansprüche 1 bis 3, **dadurch gekennzeichnet, dass** der Schritt (a') ausgeführt wird, indem ein Alkohol der Formel (VIII) in wasserfreiem Zustand, d.h. ein Alkohol, dessen Wassergehalt unter 1000 ppm liegt, eingesetzt wird.

5. Verfahren nach einem der Ansprüche 1 bis 4, **dadurch gekennzeichnet, dass** der Schritt (a') ausgeführt wird in Abwesenheit einer Base bei einer Temperatur, die in dem von 60°C bis 160°C gehenden Intervall liegt, indem ein wasserfreier Alkohol, welcher weniger als 1000 ppm Wasser enthält, eingesetzt wird und indem die Eliminierung der halogenhaltigen Säure durch Anwendung des Verfahrens 4k vorgenommen wird, wobei das Molverhältnis von Alkohol der Formel (VIII)/Silan der Formel (V) in dem von 3 bis 23 gehenden Intervall liegt.

6. Verfahren nach einem der Ansprüche 1 bis 5, **dadurch gekennzeichnet, dass** der Schritt (a') ausgeführt wird, indem als Ausgangsalkohol der Formel (VIII) ein Alkohol-Reaktant, welcher aus der Gesamtheit oder einem Teil des destillierten Gemisches auf der Basis von Alkohol der Formel (VIII) und von halogenhaltiger Säure, hervorgegangen aus der Ausführung eines vorangegangenen Arbeitsgangs auf diskontinuierliche Weise, besteht, mit gegebenenfalls erfolgender ergänzender Zugabe von neuem Alkohol der Formel (VIII) eingesetzt wird.

7. Verfahren nach einem der Ansprüche 1 bis 6, **dadurch gekennzeichnet, dass** der Schritt (b') ausgeführt wird, indem in Gegenwart eines katalytischen Aktivators gearbeitet wird, welcher als der (oder die) Katalysator(en) (i) die eine und/oder eine andere der folgenden metallischen Spezies umfasst: (i-1) mindestens ein fein verteiltes elementares Übergangsmetall; und/oder (i-2) ein Kolloid von mindestens einem Übergangsmetall; und/oder (i-3) ein Oxid von mindestens einem Übergangsmetall; und/oder (i-4) ein Salz, welches von mindestens einem Übergangsmetall und einer Mineral- oder Carbonsäure abgeleitet ist; und/oder (i-5) einen Komplex von mindestens einem Übergangsmetall, ausgerüstet mit einem oder mehreren halogenhaltigen und/oder organischen Ligand(en), der bzw. die ein oder mehrere Heteroatom(e) und/oder siliciumorganische Ligand(en) aufweisen kann bzw. können; und/oder (i-6) ein Salz, wie oben definiert, worin der metallische Anteil mit einem oder mehreren Ligand(en), wie gleichfalls oben definiert, ausgestattet ist; und/oder (I-7) eine metallische Spezies, die unter den vorerwähnten Spezies (elementares Übergangsmetall, Oxid, Salz, Komplex, komplexiertes Salz) ausgewählt ist, worin das Übergangsmetall dieses Mal mit mindestens einem anderen Metall, das in der Familie der Elemente der Gruppen 1b, 2b, 3a, 3b, 4a, 4b, 5a, 5b, 6b, 7b und 8 (mit Ausnahme von Co, Ru, Rh, Pd, Ir und Pt) des Periodensystems (gleiche Referenz) ausgewählt ist, assoziiert ist, wobei das andere Metall in seiner elementaren Form oder in einer molekularen Form genommen wird, wobei die Assoziation eine bimetallische oder plurimetallische Spezies erzeugen kann; und/oder (i-8) eine metallische Spezies, die unter den vorerwähnten Spezies (elementares Übergangsmetall und Assoziation Übergangsmetall - anderes Metall; Oxid, Salz, Komplex und komplexiertes Salz auf der Basis von Übergangsmetall oder auf der Basis einer Assoziation von Übergangsmetall-anderes Metall) ausgewählt ist, die sich auf einem inerten festen Träger, wie Aluminiumoxid, Siliciumdioxid, Ruß, einem Ton, Titanoxid, einem Aluminiumsilicat, einer Mischung von Aluminium- und Zirconiumoxiden, einem polymeren Harz, befindet; und/oder (i-9) eine trägergestützte metallische Spezies, die der oben in Absatz (i-8) angegebenen Definition entspricht, in der Struktur von welcher der inerte feste Träger seinerseits mindestens einen halogenhaltigen und/oder organischen Liganden, welcher ein oder mehrere Heteroatom(e) umfassen kann, trägt.

8. Verfahren nach Anspruch 7, **dadurch gekennzeichnet, dass** der Schritt (b') ausgeführt wird, indem in Gegenwart eines katalytischen Aktivators gearbeitet wird, der als der (oder die) Katalysator(en) (i) die eine und/oder eine andere der metallischen Spezies (i-1) bis (i-9), worin das Übergangsmetall zu der durch Ir und Pt gebildeten Untergruppe gehört, umfasst.

9. Verfahren nach Anspruch 8, **dadurch gekennzeichnet, dass** der Schritt (b') ausgeführt wird, indem in Gegenwart eines katalytischen Aktivators gearbeitet wird, der als der (oder die) Katalysator(en) (i) die eine und/oder eine andere der metallischen Spezles (i-1) bis (i-9), worin das Übergangsmetall Ir ist, umfasst.

10. Verfahren nach Anspruch 9, **dadurch gekennzeichnet, dass** der der Schritt (b') ausgeführt wird, indem in Gegenwart eines katalytischen Aktivators gearbeitet wird, der als der (oder die) Katalysator(en) (i) mindestens eine metallische Spezies vom Typ (i-5), welche zu den Iridiumkomplexen der Formel:
[Ir(R⁴)Hal]₂ (XII),
worin:
- das Symbol R⁴ für einen ungesättigten kohlenwasserstoffhaltigen Liganden steht, welcher mindestens eine Kohlenstoff=Kohlenstoff-Doppelbindung und/oder mindestens eine c≡c-Dreifachbindung umfasst, wobei diese ungesättigten Bindungen konjugiert oder nicht konjugiert sein können, wobei der Ligand: linear oder cyclisch (mono- oder polycyclisch) ist, 4 bis 30 Kohlenstoffatome aufweist, 1 bis 8 ethylenische und/oder acetylenische Ungesättigtheiten aufweist und gegebenenfalls ein oder mehrere Heteroatome umfasst,
- das Symbol Hal so, wie oben definiert, ist.
gehört, umfasst.

11. Verfahren nach einem der Ansprüche 1 bis 10, **dadurch gekennzeichnet, dass** am Ende des Schritts (b'), wenn der Katalysator in homogenem Milieu eingesetzt worden ist, man das katalytische Metall auf die folgende Weise zurückgewinnt:
- Schritt (1): man destilliert das Reaktionsmedium, um das gebildete Produkt von einem flüssigen Destillationsrückstand, welcher die Nebenprodukte und das Metall des Katalysators oder seine Derivate umfasst, abzutrennen,
- Schritt (2): man bringt den Rückstand gegebenenfalls mit Wasser in etwaiger Gegenwart eines gegenüber gebildetem H-Hal inerten organischen Lösemittels in Kontakt, um eine wässrige Phase und eine organische Phase zu erhalten,
- Schritt (3): man bringt den in (1) gebildeten Rückstand oder den in (2) gebildeten Rückstand mit einer wirksamen Menge von fester Substanz, welche das Metall des Katalysators adsorbiert, in Kontakt und
- Schritt (4): man trennt das Adsorptionsmittel von dem katalytischen Metall ab, um das Metall zurückzugewinnen.

12. Verfahren nach einem der Ansprüche 1 bis 11, **dadurch gekennzeichnet, dass** der Schritt (c) ausgeführt wird, indem wasserfreie Metallpolysulfide der Formel (X) eingesetzt werden, die vorab ausgehend von einem Alkalimetallsulfid M₂S in Form eines hydratisierten Sulfids hergestellt werden gemäß einem Verfahren, das daraus besteht, die folgenden Arbeitsphasen (1) und (2) aneinander zu fügen:
• Phase (1), worin man eine Dehydratisierung des hydratisierten Alkalimetallsulfids vornimmt, indem man das geeignete Verfahren anwendet, welches erlaubt, das Kristallwasser zu entfernen, wobei zugleich das Alkalimetallsulfid während der Dauer der Dehydratisierungsphase in festem Zustand bewahrt wird;
• Phase (2), worin man dann das Inkontaktbringen eines Mols von erhaltenem dehydratisiertem Alkalimetallsulfid mit n(x-1) Molen elementarem Schwefel vornimmt, indem man bei einer Temperatur, welche von 20°C bis 120°C geht, gegebenenfalls unter Druck und gegebenenfalls ferner in Gegenwart eines wasserfreien organischen Lösemittels arbeitet, wobei der vorerwähnte Faktor n in dem von 0,8 bis 1,2 gehenden Intervall liegt und das Symbol x so, wie oben definiert, ist.

13. Verfahren nach Anspruch 12, **dadurch gekennzeichnet, dass** man hinsichtlich der Phase (1) als Dehydratisierungsprotokoll die Trocknung des hydratisierten Alkalimetallsulfids aufführt, indem unter einem von 1,33·10² Pa bis 40·10² Pa gehenden Teilvakuum gearbeitet wird und indem die zu trocknende Verbindung auf eine Temperatur erwärmt wird, welche zu Beginn der Trocknung von 70°C bis 85°C geht, wobei dann in der Folge die Temperatur im Verlauf der Trocknung fortschreitend von der Zone, welche von 70°C bis 85°C geht, erhöht wird, bis die Zone, welche von 125°C bis 135°C geht, erreicht wird, indem einem Programm gefolgt wird, welches einen ersten Temperaturanstieg um +10°C bis +15°C am Ende einer ersten Dauer, welche von 1 h bis 6 h varliert, gefolgt von einem zweiten Temperaturanstieg um +20°C bis +50°C am Ende einer zweiten Dauer, die von 1 h bis 4 h varliert, vorsieht.
